# EUROPÄISCHE PATENTSCHRIFT

(11) **EP 3 064 067 B1**
(45) Veröffentlichungstag und Bekanntmachung des Hinweises auf die Patenterteilung: **20.12.2017**
(21) Anmeldenummer: 16157584.0
(22) Anmeldetag: 26.02.2016
(51) Int. Cl.: A21C 3/02, A21C 3/04, A21C 9/08, A21C 11/10

(54) **VORRICHTUNG ZUM FORMEN VON ABSCHNITTEN ODER ZUM FORMEN EINES BANDES AUS EINER VISKOSEN ODER PASTÖSEN MASSE**
DEVICE FOR FORMING SECTIONS OR A STRIP FROM A VISCOUS OR PASTY MASS
DISPOSITIF DE FORMAGE DE SECTIONS OU DE FORMAGE D'UNE BANDE A PARTIR D'UNE MASSE VISQUEUSE ET PATEUSE

(30) Priorität: 04.03.2015 DE 102015002689
(43) Veröffentlichungstag der Anmeldung: 07.09.2016
(73) Patentinhaber: Fritsch GmbH, 97348 Markt Einersheim (DE)
(72) Erfinder: Bernhardt, Udo, 97346 Iphofen (DE)
(74) Vertreter: Kohl, Fabian Hanno

(56) Entgegenhaltungen:
- WO-A1-2015/010148
- DE-U1-202009 018 493

## Beschreibung

Die Erfindung betrifft eine Vorrichtung zum Formen eines Formlings aus einer viskosen oder pastosen Masse, insbesondere eine Vorrichtung zum Formen von Teigabschnitten oder eines Teigbandes aus einer Teigmasse, mit den weiteren Merkmalen des Oberbegriffes des Patentanspruches 1.

Aus DE 20 2009 018 493 ist eine derartige Vorrichtung bekannt, die eine Kammer zur Aufnahme einer Teigmasse und Elemente zur Abgabe eines aus der Teigmasse geformten Formlings in Form eines Teigbandes aufweist, wobei die Kammer selbst durch äußere Begrenzungselemente gebildet wird. Die äußeren Begrenzungselemente sind als Förderbandabschnitte ausgebildet. Diese Förderbandabschnitte sind Mittel, die dazu ausgebildet sind, die in der Kammer angeordnete Masse in eine Rotationsbewegung zu versetzen oder in einer solchen Rotationsbewegung zu halten. Die rotierende Masse wird einer Trenn- oder Schneidvorrichtung zugeführt, dabei wird ein Abschnitt aus der Masse abgetrennt, der dann über ein Förderband von der Kammer weggefördert werden kann.

Eine ähnliche Vorrichtung ergibt sich aus WO2015/010148A1.

Die Eingangs genannte Vorrichtung ist zwar geeignet, aus einer Teigmasse ein Teigband oder Teigbandabschnitte zu formen, sie ist aber nicht frei von Nachteilen. So kommt es durch das unkontrollierte Schwimmen oder Rollen der in der Kammer umlaufenden Teigportion zu Verwerfungen und zu Einschlüssen im Teig, die sich beim Austragen durch den Abschälprozess der Trenn- oder Schneidevorrichtung insbesondere durch Ungleichmäßigkeit im Teigband bemerkbar machen.

Ferner führen Füllstandsdifferenzen zu unterschiedlichen Drücken am Ausgang, d. h. im Bereich der Trenn- oder Schneideeinrichtung, was sich durch Gewichtsveränderungen negativ auf die Ausbildung des Teigbandes auswirkt.

Darüber hinaus ist nachteilig, dass umlaufende Teigreste sich mit einem neuen Teig verbinden, es kommt zum Verdrängen des Restteiges in das Zentrum der Teigportion und zum Verbleib von Restteig in der Kammer, darüber hinaus kann beobachtet werden, dass sich alte und neue Teigchargen in der Kammer nicht ausreichend homogen verbinden.

Der Erfindung liegt die Aufgabe zugrunde, eine Vorrichtung mit den Merkmalen des Oberbegriffes des Anspruches 1 derart auszubilden, dass eine Vergleichmäßigung und Qualitätsverbesserung der durch die Vorrichtung erzeugten Formlinge erreicht wird und nicht kontrollierbare Restteigchargen in der Trommel vermieden werden. Diese Aufgabe wird durch die kennzeichnenden Merkmale des Anspruches 1 gelöst, vorteilhafte Weiterbildungen der Erfindung ergeben sich aus den Unteransprüchen.

Erfindungsgemäß ist vorgesehen, dass im Innenbereich der Kammer wenigstens ein die Masse gegen eines der äußeren Begrenzungselemente der Kammer beaufschlagendes Druckelement angeordnet ist, dessen die Teigmasse beaufschlagende Wandung zu einem die Masse in die Rotationsbewegung versetzenden äußeren Begrenzungselement gegenläufig angetrieben wird. Mit anderen Worten wird ein umlaufendes Druckelement, z. B. eine Walze, eine Rolle oder eine Mehrzahl von Walzen oder Rollen vorgesehen, die gegenläufig im Innenbereich der Kammer, zentrisch oder außerzentrisch angeordnet gegenläufig zur äußeren Kammerwandung oder Kammerwandungsabschnitten umlaufen. Sind die äußeren Kammerwandungen beispielsweise als Förderbandabschnitte ausgebildet, die von der Seite gesehen gegen den Uhrzeigersinn umlaufen, dann rotiert das Druckelement im Innenbereich der Kammer, d. h. entweder im Zentrum oder außerzentrisch, im Uhrzeigersinn und versetzt damit die zwischen der Wandung des Druckelementes und der Außenwandung der Kammer eingeschlossene Masse in eine umlaufende Rotations- oder Abwälzbewegung, die zu einem besonders gründlichen Durchkneten und Durchmischen der ggf. aus unterschiedlichen Chargen in die Kammer eingebrachten Masseanteile führt.

Die Masse wird kontrolliert im Bereich zwischen den sich gegenüberliegenden gegenläufig umlaufenden Wandungen bewegt, wobei mit Vorteil vorgesehen werden kann, den Abstand zwischen dem äußeren Begrenzungselement und der die Masse beaufschlagenden Fläche des Druckelementes zu verändern. Die Drehachse eines z. B. als Walze ausgebildeten und gegenläufig rotierenden Druckelementes kann konzentrisch zum Zentrum der Kammer angeordnet sein, es ist aber auch möglich, die Achse des als Walze ausgebildeten Druckelementes in Richtung der Trenn- oder Schneidevorrichtung zu verstellen, wobei nicht notwendigerweise die Verstellrichtung genau gegen das Trenn- oder Schneideelement gerichtet sein muss, sondern lediglich eine Verstellkomponente gegen das Schneideelement und den Austrag gerichtet sein sollte.

Mit Vorteil ist die Rotationsgeschwindigkeit des Druckelementes bzw. der Walze einstellbar. Durch die Rotationsgeschwindigkeit kann die Position der Teigmasse in der Kammer und insbesondere im Austragbereich, d. h. im Bereich der Trenn- oder Schneidevorrichtung kontrolliert werden.

Es ist auch möglich, die Walze in eine pulsierende umlaufende Bewegung zu versetzen und/oder den Abstand zwischen der Walze und der äußeren Wandung der Kammer pulsieren zu lassen, sodass eine den Teig durchwalkende Rotations- und Pressbewegung auf die Teigmasse ausgeübt wird.

Der Abstand des Druckelementes bzw. der Walze von dem gegenüberliegenden äußeren Begrenzungselement der Kammer kann abhängig vom Volumen der in der Kammer rotierenden Teigmasse eingestellt oder geregelt werden. Dazu ist es möglich, einen oder mehrere Sensoren zu verwenden, über die das vorlaufende vordere Ende und das hintere Ende der Teigmasse im unteren Bereich der Kammer erfasst werden kann. Daraus kann auf das Volumen der Teigmasse geschlossen werden. Die Sensoren sind geeignet, mit ihrem Ausgangssignal eine Steuereinrichtung zu beeinflussen, welche die Rotationsgeschwindigkeit des Druckelementes bzw. der Walze und/oder den Abstand zur äußeren Kammerwandung steuert. Die Sensoren können als Abstandssensoren ausgebildet werden.

In vorteilhafter Weise sind an den Stirnseiten der Walze oder des Druckelementes beidseitig sogenannte Bordscheiben angeordnet, d. h. Scheiben, zwischen denen der Teig anliegend an die Walzenwandung umläuft.

Im Bereich einer Zuführseite der Kammer, die vorzugsweise offen und im oberen Bereich der Kammer ausgebildet ist, ist eine Vorportioniereinrichtung vorgesehen, mit der z. B. durch einen Sternwalzenantrieb gleich große Teigportionen der Kammer zugeführt werden. Die Zuführung kann ebenfalls durch die Sensoren gesteuert werden und wird dann aktiv, wenn die in der Kammer gerade verarbeitete und zum Teil ausgetragene Teigmasse eine gewisse Minimalmenge unterschreitet.

Die in an sich bekannter Weise als Förderband ausgebildeten radial äußeren Begrenzungselemente der Kammer können bemehlt werden oder mit einer sonstigen Backtrennmittelmischung versehen werden, um ein Kleben des Teiges in der Kammer zu vermeiden.

Je nach Bedarf kann der durch die Trenn- oder Schneidevorrichtung definierte Teigaustragspalt der Kammer verändert werden, um Teigbänder unterschiedlicher Dicke für unterschiedliche Anwendungsbereiche zu erzeugen.

Die Erfindung ist anhand verschiedener Ausführungsbeispiele in den Zeichnungsfiguren näher erläutert. Diese zeigen:
- Fig. 1: eine erfindungsgemäße Vorrichtung, auch Trommteigbanderzeuger genannt, bei der ein als Walze ausgebildetes Druckelement im Zentrum der Kammer angeordnet ist und eine relativ große Teigmasse beaufschlagt,

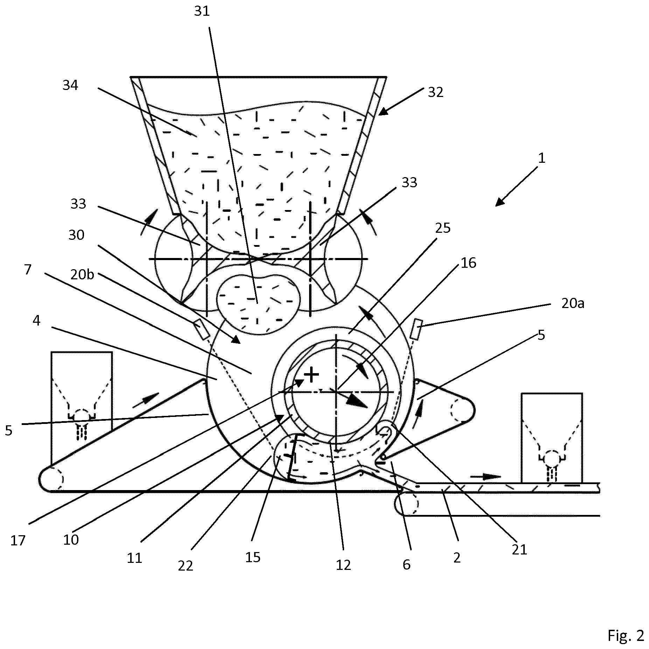

- Fig. 2: eine Vorrichtung gemäß Fig. 1, bei welcher das Druckelement außerzentrisch angeordnet ist und bei welchem über eine Vorportioniereinrichtung eine weitere Teigcharge zugegeben wird;

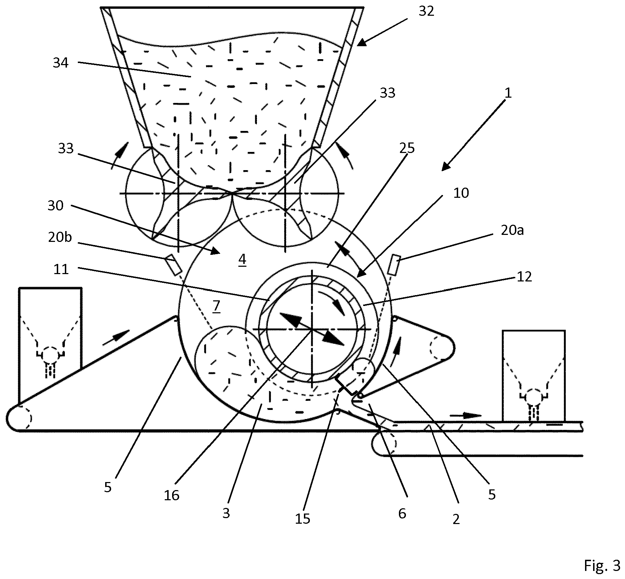

- Fig. 3: eine weitere Darstellung, bei welcher die in Figur 2 ersichtlichen Teigchargen vereinigt und von dem Druckelement außerzentrisch beaufschlagt werden.

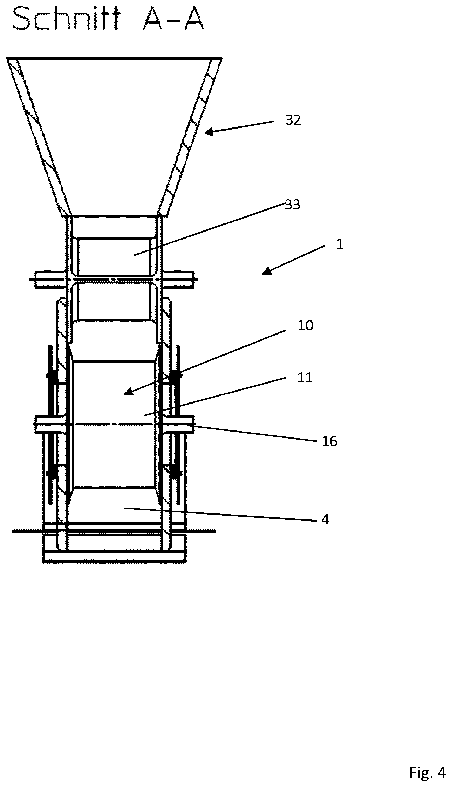

- Fig. 4: eine Schnittdarstellung gemäß Schnitt A-A in Figur 1;

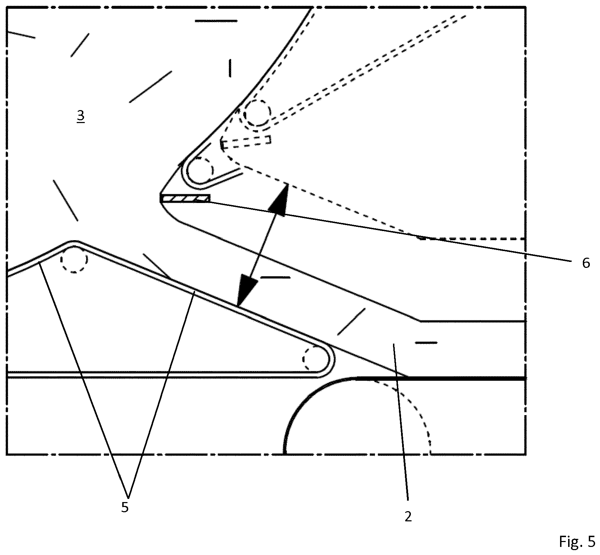

- Fig. 5: eine Detaildarstellung des Teigaustragsspaltes gemäß Figuren 1 - 3

Die in den Zeichnungsfiguren dargestellte Vorrichtung 1 dient zum Formen eines Formlings, nämlich eines Teigbandes 2 aus einer Masse 3, nämlich einer Teigmasse wobei die Vorrichtung eine Kammer 4 aufweist, in der die Teigmasse aufgenommen werden kann und aus der die aus der Teigmasse geformten Formlinge, nämlich das Teigband 2 abgetrennt werden kann. Die Kammer 4 weist äußere Begrenzungselemente 5 auf, der Innenraum der Kammer 4 ist trommelartig. Darüber hinaus umfasst die Vorrichtung 1 Mittel, die dazu ausgebildet sind, in der Kammer angeordnete Masse 3 in eine Rotationsbewegung zu versetzen oder zu halten, sodass ein aus der Kammer 4 ausgetragener Abschnitt durch eine Trenn- oder Schneidevorrichtung 6 geformt werden kann.

Im Innenbereich 7 der Kammer 4 ist wenigstens ein die Masse 3 gegen eines der äußeren Begrenzungselemente 5 der Kammer 4 beaufschlagendes Druckelement 10 in Form einer Walze 11angeordnet, dessen die Teigmasse beaufschlagende Wandung 12 zu einem die Masse in die Rotationsbewegung versetzenden äußeren Begrenzungselement 5 gegenläufig angetrieben ist.

Bei den Ausführungsbeispielen ist als Druckelement 10 eine rotierende Walze 11 im Innenbereich 7 der Kammer 4 angeordnet. Es ist aber auch denkbar, eine Mehrzahl von nebeneinanderliegenden parallelen Walzen vorzusehen.

Der Abstand 15 zwischen den äußeren Begrenzungselementen 5, die durch umlaufende Förderbänder gebildet werden, und der die Masse 3 beaufschlagenden Wandung 12 des Druckelementes ist verstellbar.

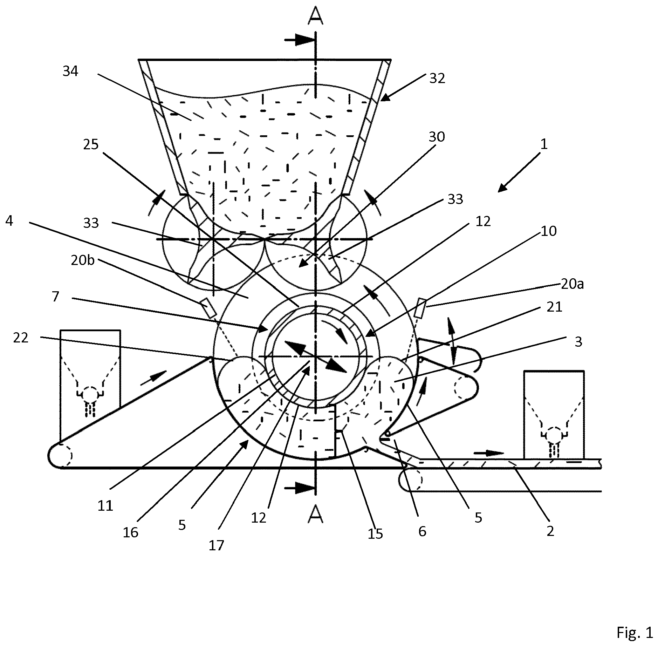

Bei dem in Figur 1 dargestellten Ausführungsbeispiel ist die Drehachse 16 des als Walze 11 ausgebildeten Druckelementes 10 konzentrisch zum Zentrum 17 der Kammer 4 angeordnet.

Die Drehachse 16 des als Walze 11 ausgebildeten Druckelementes 10 kann in Richtung der Trenn- oder Schneidevorrichtung 6 automatisch geregelt und verstellt werden, die die Abschnitte oder das Teigband 2 aus der in der Kammer 4 rotierenden Masse 3 abschält.

Die Rotationsgeschwindigkeit des Druckelementes 10 bzw. der Walze 11 kann ebenfalls eingestellt oder geregelt werden, genauso ist es aber auch möglich, das Druckelement 10 bzw. die Walze 11 in eine pulsierende umlaufende Bewegung zu versetzen oder den Abstand 15 pulsierend zu verändern.

Ferner ist es möglich, den Abstand 15 des Druckelementes 10 bzw. der Walze 11 von dem gegenüberliegenden äußeren Begrenzungselement 5 der Kammer 4 abhängig von dem Volumen der in der Kammer 4 rotierenden Masse 3 zu verändern, wobei die Veränderung automatisch durch eine Abstandsregelung erfolgen kann. Dazu wird die Lage der Masse 3 in der Kammer 4 erfasst, und zwar über wenigstens einen Sensor 20, wobei das vordere Ende 21 und das hintere Ende 22 der zwischen dem äußeren Begrenzungselement 5 und der Kammer 4 und der Walze 11 rotierenden Masse 3 durch jeweils einen Sensor 20a, 20b detektierbar ist. Beide Sensoren 20a, 20b können als Abstandssensoren ausgebildet sein.

Die die Masse (3) beaufschlagende Wandung 12 der Walze 11 ist beidseitig durch Bordscheiben 25 begrenzt, sodass der in der Kammer 4 rotierende Teig innerhalb der voneinander beabstandeten Bordscheiben 25 gehalten wird. Im Bereich einer Zuführseite 30 der Kammer 4 ist eine Portioniereinrichtung 32 zur Abgabe etwa gleichgroßer Masseportionen 31 angeordnet, die als sogenannter Sternwalzenportionierer ausgebildet ist. Über Sternwalzen 33 wird aus einem Teigvorrat 34 eine Masseportion 31 abgeklemmt und in die Kammer (4) gefördert. Die Aktivierung der Portioniereinrichtung 32 wird ebenfalls durch die Sensoren 20 abhängig von der Teigmasse in der Trommel gesteuert.

### BEZUGSZEICHENLISTE

- 1: Vorrichtung
- 2: Teigband
- 3: Masse
- 4: Kammer
- 5: Begrenzungselement
- 6: Schneidevorrichtung
- 7: Innenbereich v. 4
- 8:

- 10: Druckelement
- 11: Walze
- 12: Wandung v. 10
- 15: Abstand
- 16: Drehachse
- 17: Zentrum v. 4
- 18: Pfeilrichtung

- 20a, b: Sensor
- 21: vorderes Ende
- 22: hinteres Ende

- 25: Bordscheiben

- 30: Zuführseite
- 31: Masseportion
- 32: Portioniereinrichtung
- 33: Sternwalze
- 34: Teigvorrat

## Patentansprüche

1. Vorrichtung (1) zum Formen eines Formlings aus einer viskosen oder pastösen Masse (3), insbesondere zum Formen von Teigabschnitten oder zum Formen eines Teigbandes (2) aus einer Teigmasse, mit einer Kammer (4) zur Aufnahme der Masse (3) und zur Abgabe des aus der Masse (3) geformten Formlings, wobei die Kammer (4) durch äußere Begrenzungselemente (5) gebildet ist und einen trommelartigen Kammerinnenraum aufweist und wobei die Vorrichtung (1) Mittel aufweist, die dazu ausgebildet sind, die in der Kammer (4) angeordnete Masse (3) in eine Rotationsbewegung zu versetzen und/oder zu halten, so dass ein aus der Kammer (4) ausgetragener Abschnitt der Masse (3) durch eine Trenn- oder Schneidevorrichtung (6) formbar ist, **dadurch gekennzeichnet, dass** im Innenbereich (7) der Kammer (4) wenigstens ein die Masse (3) gegen eines der äußeren Begrenzungselemente (5) der Kammer (4) beaufschlagendes Druckelement (10) angeordnet ist, dessen die Masse (3) beaufschlagende Wandung (12) zu einem die Masse (3) in die Rotationsbewegung versetzenden äußeren Begrenzungselement (5) gegenläufig angetrieben ist.

2. Vorrichtung nach Anspruch 1, **dadurch gekennzeichnet, dass** das Druckelement (10) als wenigstens eine Walze (11) oder Rolle ausgebildet ist.

3. Vorrichtung nach Anspruch 1 oder 2, **dadurch gekennzeichnet, dass** als Druckelement (10) eine Mehrzahl von Walzen (11) oder Rollen angeordnet ist.

4. Vorrichtung nach einem der Ansprüche 1 - 3, **dadurch gekennzeichnet, dass** der Abstand (15) zwischen dem äußeren Begrenzungselement (5) und der die Masse (3) beaufschlagenden Wandung (12) des Druckelementes (10) veränderbar ist.

5. Vorrichtung nach einem der vorhergehenden Ansprüche, **dadurch gekennzeichnet, dass** die Drehachse (16) eines als Walze (11) ausgebildeten Druckelementes (10) konzentrisch zum Zentrum (17) der Kammer (4) angeordnet ist.

6. Vorrichtung nach einem der vorhergehenden Ansprüche, **dadurch gekennzeichnet, dass** die Drehachse (16) des als Walze (11) ausgebildeten Druckelementes (10) in Richtung der Trenn- oder Schneidevorrichtung (6) verstellbar ist, die die Abschnitte oder das Teigband (2) aus der in der Kammer (4) rotierenden Masse (3) abschält.

7. Vorrichtung nach einem der vorhergehenden Ansprüche, **dadurch gekennzeichnet, dass** die Rotationsgeschwindigkeit des Druckelementes (10) bzw. der Walze (11) einstellbar und oder veränderbar ist.

8. Vorrichtung nach einem der vorhergehenden Ansprüche, **dadurch gekennzeichnet, dass** das Druckelement (10) bzw. die Walze (11) in eine pulsierende umlaufende Bewegung versetzbar ist.

9. Vorrichtung nach einem der vorhergehenden Ansprüche, **dadurch gekennzeichnet, dass** der Abstand zwischen dem Druckelement (10) bzw. der Walze (11) und dem äußeren Begrenzungselement (5) oder der Schneide- oder Trennvorrichtung (6) zum pulsierenden Beaufschlagen der Masse (3) pulsierend veränderbar ist.

10. Vorrichtung nach einem der vorhergehenden Ansprüche, **dadurch gekennzeichnet, dass** der Abstand des Druckelements (10) bzw. der Walze (11) von dem gegenüberliegenden äußeren Begrenzungselement (5) der Kammer (4) abhängig von dem Volumen der in der Kammer (4) rotierenden Masse (3) veränderbar ist.

11. Vorrichtung nach einem der vorhergehenden Ansprüche, **dadurch gekennzeichnet, dass** zur Erfassung der Lage der Masse(3) in der Kammer (4) wenigstens ein Sensor (20) angeordnet ist.

12. Vorrichtung nach einem der vorhergehenden Ansprüche, **dadurch gekennzeichnet, dass** die die Masse (3) beaufschlagende Wand der Walze(11) beidseitig durch Bordscheiben (25) begrenzt ist.

13. Vorrichtung nach einem der vorhergehenden Ansprüche, **dadurch gekennzeichnet, dass** im Bereich einer Zuführseite (30)der Kammer (4) eine Portioniereinrichtung (32) zur Abgabe etwa gleichgroßer Masseportionen (31) angeordnet ist.

14. Vorrichtung nach einem der vorhergehenden Ansprüche, **dadurch gekennzeichnet, dass** das mindestens eine Begrenzungselement (5) der Kammer (4) als Förderband ausgebildet ist, dessen der Kammerinnenseite zugewandte Fläche mittels einer Zuführeinrichtung mit Mehl oder einem Backtrennmittel beaufschlagbar ist.

15. Vorrichtung nach einem der vorhergehenden Ansprüche, **dadurch gekennzeichnet, dass** der durch die Trenn- oder Schneidevorrichtung (6) und einen Austragsbandabschnitt definierte Teigbandaustragspalt verstellbar ist.

## Claims

1. Device (1) for shaping a blank from a viscous or pasty mass (3), in particular for shaping dough portions, or for shaping a dough strip (2) from a dough mass, having a chamber (4) for receiving the mass (3) and for dispensing the blank formed from the mass (3), wherein the chamber (4) is formed by external delimitation elements (5) and has a drum-type chamber internal space, and wherein the device (1) has means which are configured for setting or keeping a mass (3) that is disposed in the chamber (4) in rotation such that a portion of the mass (3) that is delivered from the chamber (4) is capable of being shaped by a severing or cutting device (6), **characterized in that** at least one compression element (10) which impinges the mass (3) in relation to one of the external delimitation elements (5) of the chamber (4) is disposed in the internal region (7) of the chamber (4), the wall (12) of said compression element (10) that impinges the mass (3) being driven in the opposite direction to an external delimitation element (5) that sets the mass (3) in rotation.

2. Device according to Claim 1, **characterized in that** the compression element (10) is configured as at least one roller (11) or roll.

3. Device according to either of Claims 1 and 2, **characterized in that** a plurality of rollers (11) or rolls are disposed as the compression element (10) .

4. Device according to one of Claims 1 to 3, **characterized in that** the spacing (15) between the external delimitation element (5) and that wall (12) of the compression element (10) that impinges the mass (3) is variable.

5. Device according to one of the preceding claims, **characterized in that** the rotation axis (16) of a compression element (10) that is configured as a roller (11) is disposed so as to be concentric with the centre (17) of the chamber (4).

6. Device according to one of the preceding claims, **characterized in that** the rotation axis (16) of the compression element (10) that is configured as a roller (11) is adjustable in the direction of the severing or cutting device (6) which peels the portions or the dough strip (2) from the mass (3) rotating in the chamber (4).

7. Device according to one of the preceding claims, **characterized in that** the rotational speed of the compression element (10), or of the roller (11), respectively, is settable and/or variable.

8. Device according to one of the preceding claims, **characterized in that** the compression element (10), or the roller (11), respectively, is capable of being set in a pulsating revolving motion.

9. Device according to one of the preceding claims, **characterized in that** for impinging the mass (3) in a pulsating manner the spacing between the compression element (10), or of the roller (11), respectively, and the external delimiting element (5), or the cutting or severing device (6), is variable in a pulsating manner.

10. Device according to one of the preceding claims, **characterized in that** the spacing of the compression element (10), or of the roller (11), respectively, from the opposite external delimitation element (5) of the chamber (4) is variable so as to depend on the volume of the mass (3) rotating in the chamber (4).

11. Device according to one of the preceding claims, **characterized in that** at least one sensor (20) is disposed for detecting the location of the mass (3) in the chamber (4).

12. Device according to one of the preceding claims, **characterized in that** that wall of the roller (11) that impinges the mass (3) is delimited on both sides by flange disks (25).

13. Device according to one of the preceding claims, **characterized in that** a portioning installation (32) for dispensing mass portions (31) of approximately identical size is disposed in the region of an infeed side (30) of the chamber (4).

14. Device according to one of the preceding claims, **characterized in that** the at least one delimitation element (5) of the chamber (4) is configured as a conveyor belt, that surface of the latter that faces the chamber interior being impingeable with flour or a backing release agent by means of a feeding installation.

15. Device according to one of the preceding claims, **characterized in that** the dough strip delivery gap that is defined by the severing or cutting device (6) and by a delivery belt section is variable.

## Revendications

1. Dispositif (1) pour le formage d'une ébauche à partir d'une masse visqueuse ou pâteuse (3), en particulier pour le formage de sections de pâte ou pour le formage d'une bande de pâte (2) à partir d'une masse de pâte, avec une chambre (4) destinée à contenir la masse (3) et à délivrer l'ébauche formée à partir de la masse (3), dans lequel la chambre (4) est formée par des éléments de limitation extérieurs (5) et présente un espace intérieur de chambre en forme de tambour et dans lequel le dispositif (1) présente des moyens, qui sont conçus pour mettre et/ou maintenir en mouvement de rotation la masse (3) disposée dans la chambre (4), de telle manière qu'une section de la masse (3) extraite de la chambre (4) puisse être formée par un dispositif de séparation ou de coupe (6), **caractérisé en ce qu'**au moins un élément de pression (10) poussant la masse (3) contre un des éléments de limitation extérieurs (5) de la chambre (4) est disposé dans la région intérieure (7) de la chambre (4), et dont la paroi (12) poussant la masse (3) est entraînée en sens contraire d'un élément de limitation extérieur (5) mettant la masse (3) en mouvement de rotation.

2. Dispositif selon la revendication 1, **caractérisé en ce que** l'élément de pression (10) est réalisé sous la forme d'au moins un cylindre (11) ou un rouleau.

3. Dispositif selon la revendication 1 ou 2, **caractérisé en ce qu'**une multiplicité de cylindres (11) ou de rouleaux sont disposés en tant qu'élément de pression (10).

4. Dispositif selon l'une quelconque des revendications 1 à 3, **caractérisé en ce que** la distance (15) entre l'élément de limitation extérieur (5) et la paroi (12) de l'élément de pression (10) poussant la masse (3) peut être modifiée.

5. Dispositif selon l'une quelconque des revendications précédentes, **caractérisé en ce que** l'axe de rotation (16) d'un élément de pression (10) réalisé sous forme de cylindre (11) est disposé de façon concentrique au centre (17) de la chambre (4).

6. Dispositif selon l'une quelconque des revendications précédentes, **caractérisé en ce que** l'axe de rotation (16) de l'élément de pression (10) réalisé sous la forme d'un cylindre (11) peut être déplacé en direction du dispositif de séparation ou de coupe (6), qui pèle les sections ou la bande de pâte (2) à partir de la masse (3) tournant dans la chambre (4).

7. Dispositif selon l'une quelconque des revendications précédentes, **caractérisé en ce que** la vitesse de rotation de l'élément de pression (10) ou du cylindre (11) est réglable et/ou modifiable.

8. Dispositif selon l'une quelconque des revendications précédentes, **caractérisé en ce que** l'élément de pression (10) ou le cylindre (11) peut être mis en mouvement de rotation pulsé.

9. Dispositif selon l'une quelconque des revendications précédentes, **caractérisé en ce que** la distance entre l'élément de pression (10) ou le cylindre (11) et l'élément de limitation extérieur (5) ou le dispositif de séparation ou de coupe (6) peut être modifiée de façon puisée pour la compression puisée de la masse (3).

10. Dispositif selon l'une quelconque des revendications précédentes, **caractérisé en ce que** la distance de l'élément de pression (10) ou du cylindre (11) à l'élément de limitation extérieur opposé (5) de la chambre (4) peut être modifiée en fonction du volume de la masse (3) tournant dans la chambre (4).

11. Dispositif selon l'une quelconque des revendications précédentes, **caractérisé en ce qu'**au moins un capteur (20) est disposé de façon à détecter la position de la masse (3) dans la chambre (4).

12. Dispositif selon l'une quelconque des revendications précédentes, **caractérisé en ce que** la paroi du cylindre (11) poussant la masse (3) est limitée de part et d'autre par des disques de bordure (25) .

13. Dispositif selon l'une quelconque des revendications précédentes, **caractérisé en ce qu'**un dispositif de portionnement (32) est disposé dans la région du côté d'alimentation (30) de la chambre (4) pour la délivrance de portions de masse (31) de grandeur sensiblement égale.

14. Dispositif selon l'une quelconque des revendications précédentes, **caractérisé en ce que** ledit au moins un élément de limitation (5) de la chambre (4) est réalisé sous la forme d'une bande transporteuse, dont la face tournée vers le côté intérieur de la chambre peut être garnie de farine ou d'un agent de démoulage au moyen d'un dispositif d'alimentation.

15. Dispositif selon l'une quelconque des revendications précédentes, **caractérisé en ce que** la fente d'extraction de la bande de pâte définie par le dispositif de séparation ou de coupe (6) et une partie de bande de sortie est réglable.
